# EUROPEAN PATENT APPLICATION

(11) **EP 4 793 673 A1**
(43) Date of publication of application: **19.08.2026**
(21) Application number: 24826951.6
(22) Date of filing: 27.09.2024
(51) Int. Cl.: G01V 5/00

(54) **RAY INSPECTION SYSTEM**

(30) Priority: 09.10.2023 CN 202311300827
(71) Applicant: Tsinghua University, Beijing 100084 (CN); Nuctech Company Limited, TongFang Building Shuangqinglu Haidian District Beijing 100084 (CN)
(72) Inventor: CHEN, Zhiqiang, Beijing 100084 (CN); ZHANG, Li, Beijing 100084 (CN); LI, Liang, Beijing 100084 (CN); HONG, Mingzhi, Beijing 100084 (CN); WANG, Zinan, Beijing 100084 (CN); XIE, Lei, Beijing 100084 (CN); YE, Shuai, Beijing 100084 (CN); CHANG, Ming, Beijing 100084 (CN)
(74) Representative: Cabinet Beau de Loménie
(86) International application number: PCT/CN2024/121804
(87) International publication number: WO 2025/077601

(57) **Abstract**

Provided is a ray inspection system suitable for inspecting an elongated article, including: a ray inspection device including a scanning device suitable for X-ray scanning inspection of the elongated article; a transmission track including an input track located on an upstream side of the scanning device and an output track located on a downstream side of the scanning device; and a carrying mechanism, where two ends of the carrying mechanism are movably installed on the transmission track, and the carrying mechanism is configured to transport the elongated article from the input track through the scanning device to the output track for X-ray scanning inspection of the elongated article.

## Description

This application claims priority to Chinese Patent Application No. 202311300827.X, filed on October 9, 2023, the disclosure of which is hereby incorporated in its entirety by reference.

### TECHNICAL FIELD

At least one embodiment of the present disclosure relates to a ray inspection system, and in particular to a ray inspection system suitable for inspecting an elongated article.

### BACKGROUND

Based on requirements for public safety, a ray inspection system is often used in large public places such as a border checkpoint, a water conservancy project, and a municipal building to inspect an elongated article such as a pipeline and a support rod, as well as to check whether there are prohibited items such as drugs and explosives in the elongated article, or to check whether there are defects such as cracks and holes in the elongated article itself.

Technical means for helical scanning of elongated articles with X-rays has been proposed for non-destructive imaging detection of elongated articles. Due to the long length and heavy weight of the elongated article to be detected, a large ray inspection system is required for full-scale detection. In such technical means, a movement of the detected elongated article during a detection process needs to be very smooth, and it is required to perform full-scale detection of the elongated article. In addition, when conducting X-ray inspection on the elongated article in the related art, there may be differences in lengths of the inspected elongated articles, and if a shielding door is opened or closed according to a predetermined program, it may cause a mismatch between a timing of opening or closing the shielding door and the length of the elongated article. For example, for an elongated article with a large length, there may be a case where the shielding door begins to open before the inspection of the elongated article is completed, resulting in X-ray leakage.

### SUMMARY

According to one aspect of the present disclosure, a ray inspection system suitable for inspecting an elongated article is provided, including:
a ray inspection device including a scanning device suitable for performing an X-ray scanning inspection of the elongated article;
a transmission track including an input track located on an upstream side of the scanning device and an output track located on a downstream side of the scanning device; and
a carrying mechanism, two ends of the carrying mechanism are movably installed on the transmission track, and the carrying mechanism is configured to transport the elongated article from the input track through the scanning device to the output track for the X-ray scanning inspection of the elongated article.

In some embodiments, the carrying mechanism includes: a carrier plate suitable for carrying the elongated article; two coupling structures respectively installed at two ends of the carrier plate and movably coupled with the input track and the output track; and a first driving mechanism installed on one of the two coupling structures to drive the carrier plate to move from the input track through the scanning device to the output track.

In some embodiments, the carrying mechanism further includes a positioning mechanism installed on the carrier plate and configured to hold the elongated article on the carrier plate.

In some embodiments, the positioning structure includes: a fixed stopper installed at a first end of the carrier plate; a mobile stopper installed at a second end of the carrier plate opposite to the first end, and the mobile stopper is configured to cooperate with the fixed stopper to clamp the elongated article; and a second driving mechanism installed on the carrier plate and configured to drive the mobile stopper to move towards the fixed stopper so as to clamp the elongated article placed on the carrier plate.

In some embodiments, the second driving mechanism includes: a driving part installed on the carrier plate; and a telescopic rod configured to stretch and contract relative to the carrier plate under a drive of the driving part, and the mobile stopper is installed at an end portion of the telescopic rod.

In some embodiments, the fixed stopper is provided with a first detection device configured to detect an abutment of one end of the elongated article against the fixed stopper.

In some embodiments, the first driving mechanism starts driving the carrier plate to move towards the output track, in response to the first detection device detecting that one end of the elongated article is abutting against the fixed stopper.

In some embodiments, the ray inspection device further includes: an upstream shielding channel disposed upstream of the scanning device; an entrance shielding door installed at an entrance of the upstream shielding channel; a downstream shielding channel disposed downstream of the scanning device; and an exit shielding door installed at an exit of the downstream shielding channel, the upstream shielding channel, the downstream shielding channel, the closed entrance shielding door, and the closed exit shielding door enclose an X-ray inspection space to shield X-rays from leaking to an external environment.

In some embodiments, the entrance shielding door is configured to begin to open, in response to the first detection device detecting that one end of the elongated article is abutting against the fixed stopper, so as to allow the elongated article to enter the ray inspection device.

In some embodiments, a second detection device is provided on an inner side of the entrance of the upstream shielding channel, and the entrance shielding door is configured to begin to close in response to a rear end of the carrying mechanism being detected by the second detection device.

In some embodiments, a third detection device is provided on an inner side of the exit of the downstream shielding channel, and the exit shielding door is configured to begin to open in response to a front end of the carrying mechanism being detected by the third detection device so as to allow the elongated article to be removed from the ray inspection device.

In some embodiments, in response to an appearance of the mobile stopper of the carrying mechanism being detected by the third detection device, the second driving mechanism drives the mobile stopper to move away from the fixed stopper so as to release the elongated article placed on the carrier plate.

In some embodiments, the third inspection device includes a proximity switch installed on the inner side of the exit of the downstream shielding channel; the front end of the carrying mechanism is installed with a first cooperating switch cooperating with the proximity switch, so that when the proximity switch approaches the first cooperating switch, the exit shielding door begins to open; and the fixed stopper is installed with a second cooperating switch cooperating with the proximity switch, so that when the proximity switch approaches the second cooperating switch, the second driving mechanism drives the mobile stopper to move away from the fixed stopper.

In some embodiments, a fourth detection device is provided on an outer side of the exit of the downstream shielding channel, and the exit shielding door is configured to begin to close in response to an appearance of the mobile stopper of the carrying mechanism being detected by the fourth detection device.

In some embodiments, the scanning device includes: an upright frame; and a slip ring rotatably installed on the upright frame, and the carrying mechanism passes through an interior of the slip ring in an axial direction.

In some embodiments, a degree of rotation of the slip ring is determined based on a movement speed of the carrying mechanism, such that a rotational speed of the slip ring matches a movement speed of the elongated article.

In some embodiments, the carrying mechanism further includes two longitudinal frames and transverse frames respectively installed between two ends of the two longitudinal frames, the carrier plate is installed on the longitudinal frames and the transverse frames, the two coupling structures are respectively installed on two transverse frames, and the first driving mechanism is installed on one of the two transverse frames.

In some embodiments, the first driving mechanism includes: a drive motor installed on one of the two transverse frames; a drive shaft installed at first ends of the two longitudinal frames and configured to rotate under a drive of the drive motor; and two driving wheels respectively installed at two ends of the drive shaft, and the two driving wheels respectively abut against two transmission tracks to drive the longitudinal frames and the transverse frames to move.

In some embodiments, the first driving mechanism further includes: two driven wheels respectively installed at second ends of the two longitudinal frames opposite to the first ends, and the two driven wheels respectively abut against the two transmission tracks.

In some embodiments, the first driving mechanism further includes a speed reduction structure, and the drive motor is coupled to the driving shaft through the speed reduction mechanism.

In some embodiments, the carrying mechanism further includes a speed measuring mechanism installed on the longitudinal frame, and the speed measuring mechanism is configured to measure a movement speed of the carrying mechanism.

In some embodiments, the speed measuring mechanism includes: a support frame installed on the longitudinal frame; a rotating shaft rotatably installed on the support frame; a rotating wheel installed at a lower end of the rotating shaft, and the rotating wheel is configured to rotate when the carrying mechanism travels; and an encoder installed on the support frame and meshing with an upper end of the rotating shaft.

In some embodiments, the speed measuring mechanism further includes an elastic holding mechanism configured to hold the rotating wheel in elastic contact with the transmission track.

### BRIEF DESCRIPTION OF THE DRAWINGS

FIG. 1 shows a top view of a ray inspection system according to an exemplary embodiment of the present disclosure.
FIG. 2 shows an enlarged schematic diagram of part A shown in FIG. 1.
FIG. 3 shows a side view of the ray inspection system shown in FIG. 1.
FIG. 4 shows an enlarged schematic diagram of part B shown in FIG. 2.
FIG. 5 shows a three-dimensional schematic diagram of a combination of a carrying mechanism and a transmission track according to an exemplary embodiment of the present disclosure, where a carrier plate is not shown.
FIG. 6 shows a three-dimensional schematic diagram of a speed measuring mechanism according to an exemplary embodiment of the present disclosure.
FIG. 7 shows a principle diagram of a scanning device according to an exemplary embodiment of the present disclosure.
FIG. 8A to FIG. 8D show schematic diagrams of an operation process of a ray inspection system inspecting an elongated article according to an exemplary embodiment of the present disclosure.

### DETAILED DESCRIPTION OF EMBODIMENTS

Technical solutions in embodiments of the present disclosure will be described clearly and completely with reference to the accompanying drawings. It is obvious that the embodiments described are only some embodiments of the present disclosure, rather than all embodiments. The following descriptions of at least one exemplary embodiment are merely illustrative and are in no way intended to limit the present disclosure, and application or uses thereof. All other embodiments, which may be derived from embodiments in the present disclosure by those of ordinary skill in the art without creative labor, are intended to be within the protection scope of the present disclosure.

In the following detailed descriptions, for purposes of explanation, numerous specific details are set forth in order to provide a thorough understanding of embodiments of the present disclosure. It is obvious, however, that one or more embodiments may be implemented without these specific details. In other instances, well-known structures and apparatuses are shown in diagram form to simplify the accompanying drawings. Technologies, methods, and apparatuses known to those skilled in the art may not be discussed in detail, but should, where appropriate, be regarded as part of the granted specification.

In the descriptions of the present disclosure, it should be understood that directions or positional relationships indicated by directional terms such as "front, rear, upper, lower, left, right", "lateral, vertical, perpendicular, horizontal", "top, bottom" and the like are generally based on directions or positional relationships shown in the accompanying drawings, based on a travel direction of a vehicle, and are merely for the convenience of describing the present disclosure and simplifying description. In a case of no contrary explanation, these directional terms do not indicate and imply that the device or element referred to must have a particular orientation or be constructed and operated in a particular orientation, and therefore, should not be construed as limiting the protection scope of the present disclosure. The terms "inner" and "outer" refer to being inside or outside relative to a profile of each component itself.

In the descriptions of the present disclosure, it should be understood that the use of words such as "first" and "second" for defining components is only for the purpose of distinguishing corresponding components. Unless otherwise stated, the above-mentioned words do not have a special meaning and therefore cannot be understood as limiting the protection scope of the present disclosure.

According to a general inventive concept of the present disclosure, there is provided a ray inspection system suitable for inspecting an elongated article such as a pipeline and a support rod, including: a ray inspection device, a transmission track, and a carrying mechanism. The ray inspection device includes a scanning device suitable for X-ray scanning inspection of the elongated article. The transmission track includes an input track located on an upstream side of the scanning device and an output track located on a downstream side of the scanning device. Two ends of the carrying mechanism are movably installed on the transmission track, and the carrying mechanism is configured to transport the elongated article from the input track through the scanning device to the output track for X-ray scanning inspection of the elongated article by the scanning device 11.

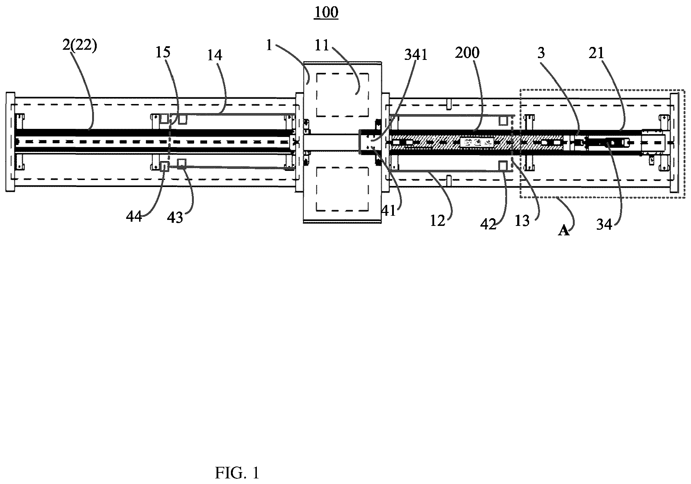

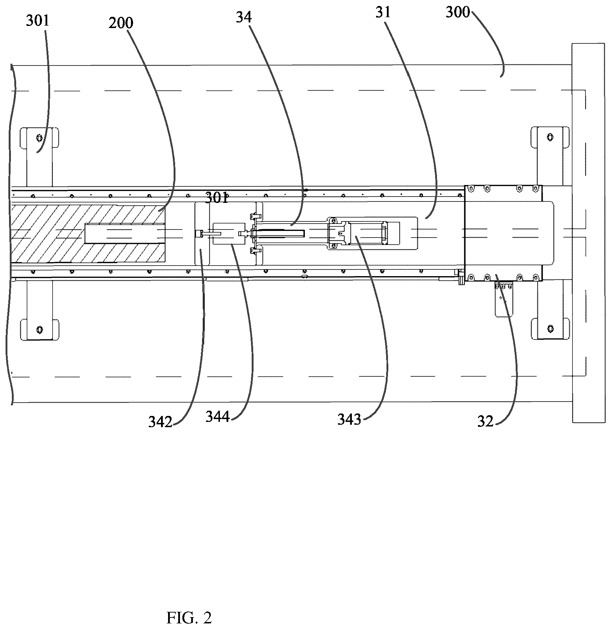

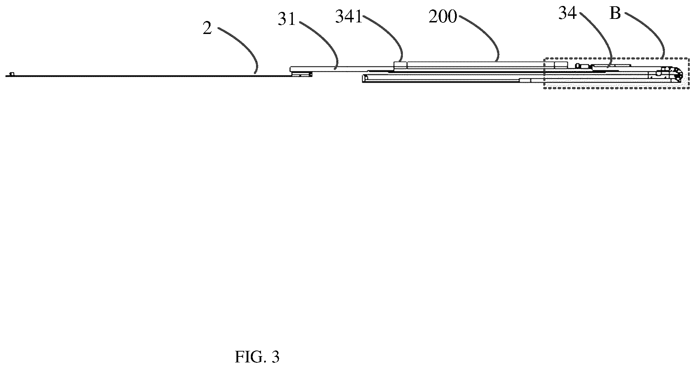

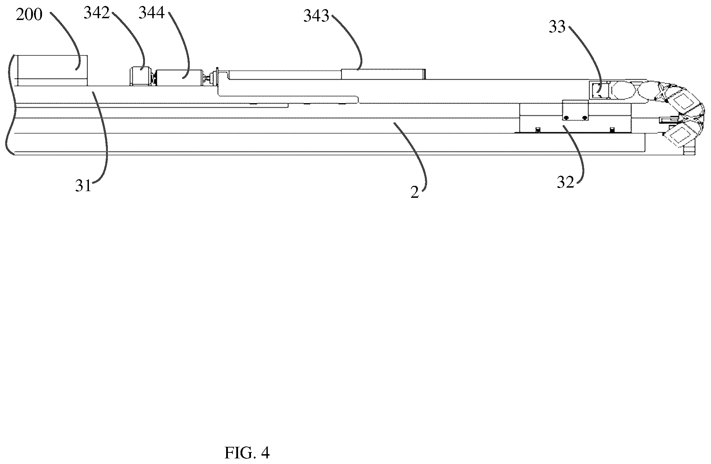

FIG. 1 shows a top view of a ray inspection system according to an exemplary embodiment of the present disclosure. FIG. 2 shows an enlarged schematic diagram of part A shown in FIG. 1. FIG. 3 shows a side view of the ray inspection system shown in FIG. 1. FIG. 4 shows an enlarged schematic diagram of part B shown in FIG. 2.

According to an exemplary embodiment of the present disclosure, referring to FIG. 1 to FIG. 4, there is provided a ray inspection system 100 suitable for inspecting an elongated article 100 such as a pipeline and a support rod in a large public place such as a border checkpoint, a water conservancy project, and a municipal building. The ray inspection system 100 includes a ray inspection device 1, a transmission track 2, and a carrying mechanism 3. The ray inspection device 1 includes a scanning device 11 suitable for X-ray scanning inspection of the elongated article 200. The transmission track 2 includes an input track 21 located on an upstream side of the scanning device 11 and an output track 22 located on a downstream side of the scanning device 11 in a movement direction of the inspected elongated article 200. Two opposite ends of the carrying mechanism 3 are movably installed on the transmission track 2, and are configured to smoothly transport the elongated article 200 from the input track 21 through the scanning device 11 to the output track 22, for X-ray scanning inspection of the elongated article 200 by the X-ray inspection device 1, such as inspecting whether prohibited items such as drugs and explosives are accommodated inside the on-site elongated article 200 such as the pipeline, or whether there are defects such as cracks, cavities, and bubbles on the pipeline. Furthermore, the carrying mechanism may operate at a very stable speed over a long distance and achieve high-precision non-destructive imaging detection of the elongated article.

In some exemplary embodiments, the carrying mechanism 3 includes a carrier plate 31, two coupling mechanisms 32, and a first driving mechanism 33. For example, the carrier plate 31 made of carbon fiber board or other hard plastic materials is suitable for carrying the elongated article 200. The carrier plate 31 may be formed as a long groove to accommodate the elongated article 200, or a cross-section the carrier plate may have a substantially arc shape so as to place the elongated article 200 in the middle of the carrier plate 31. The two coupling structures 32 are respectively installed at two opposite ends of the carrier plate 31 and are movably coupled with the input track 21 and the output track 22. The first driving mechanism 33 is installed on one of the two coupling structures 32 to drive the carrier plate 31 to move from the input track 21 through the scanning device 11 to the output track 22, so that the scanning device 11 completes X-ray inspection over an entire length of the elongated article 200.

In some exemplary embodiments, referring to FIG. 2 to FIG. 4, the carrier plate 31 spans over the input track 21 and the output track 22, and a distance between opposite end portions of the input track 21 and the output track 22 is not less than a width of the scanning device 11. In this way, the carrier plate 31 spans between the input track 21 and the output track 22, and the scanning device 11 may perform X-ray scanning inspection on the elongated article 200 located on the carrier plate, avoiding an influence of the transmission track 2 on X-ray transmission.

In some exemplary embodiments, referring to FIG. 2 to FIG. 4, the carrying mechanism 3 further includes a positioning mechanism 34 installed on the carrier plate 31, and the positioning mechanism 34 is configured to stably hold the elongated article 200 on the carrier plate 31, so that the elongated article 200 may not move during inspection.

In some exemplary embodiments, the positioning structure includes: a fixed stopper 341 installed at a first end (a lower end or a downstream end in FIG. 3) of the carrier plate 31, a mobile stopper 342 installed at a second end (an upper end or an upstream end in FIG. 2) of the carrier plate 31 opposite to the first end, and a second driving mechanism. The mobile stopper 342 cooperates with the fixed stopper 341 to clamp the elongated article 200. The second driving mechanism is installed on the carrier plate 31 and configured to drive the mobile stopper 342 to move towards the fixed stopper 341 so as to clamp the elongated article 200 placed on the carrier plate.

In some exemplary embodiments, the second driving mechanism includes a driving part 343 installed on the carrier plate 31; and a telescopic rod 344, driven by the driving part 343, is configured to stretch and contract relative to the carrier plate 31, where the mobile stopper 342 is installed at an end portion of the telescopic rod 344 to move linearly under the driving of the telescopic rod. The driving part 343 may include, for example, an electric driving part driven by an electromagnetic actuation mechanism, or driven by a motor through cooperation of a screw and the mobile stopper. The driving part 343 may further include a pneumatic cylinder or a hydraulic cylinder.

In some exemplary embodiments, referring to FIG. 2 to FIG. 4, the fixed stopper 341 is provided with a first detection device 41 configured to detect an abutment of one end of the elongated article 200 against the fixed stopper 341. That is to say, when one end (front end) of the elongated article 200 abuts against the fixed stopper 341, the first detection device 41 sends a trigger signal to indicate that the elongated article 200 is clamped on the carrier plate 31 by the mobile stopper and the fixed stopper. The first detection device 41 may include, for example, a piezoelectric sensor, a proximity switch, or the like, or may include a light curtain sensor.

Furthermore, the first driving mechanism 33 starts driving the carrier plate 31 towards the output track 22 in response to the first detection device 41 detecting that one end of the elongated article 200 is abutting against the fixed stopper 341. That is to say, in a case that the first detection device 41 detects that one end of the elongated article 200 abuts against the fixed stopper 341, it is indicated that the elongated article 200 has been placed on the carrier plate 31 and firmly clamped, the first driving mechanism 33 starts driving the carrier plate 31 towards the output track 22, so that the scanning device 11 performs X-ray scanning inspection on the elongated article.

In some exemplary embodiments, referring to FIG. 2 to FIG. 4, the ray inspection device 1 further includes: an upstream shielding channel 12 disposed upstream of the scanning device 11; an entrance shielding door 13 installed at an entrance of the upstream shielding channel 12; a downstream shielding channel 14 disposed downstream of the scanning device 11; and an exit shielding door 15 installed at an exit of the downstream shielding channel 14. The upstream shielding channel 12, the downstream shielding channel 14, the closed entrance shielding door 13, and the closed exit shielding door 15 enclose an X-ray inspection space that accommodates the carrier plate 31 and the elongated article 200, so as to shield X-rays from leaking to an external environment when the scanning device 11 performs scanning inspection on the elongated article 200. The entrance shielding door 13 and the exit shielding door 15 may be provided as electric shielding doors, which may not only facilitate unloading of the elongated article, but also ensure a radiation safety of the apparatus.

In some exemplary embodiments, the entrance shielding door 13 is configured to begin to open in response to the first detection device 41 detecting that one end of the elongated article 200 is abutting against the fixed stopper 341, so as to allow the elongated article 200 to enter the ray inspection device 1 under a carry of the carrier plate 31.

In some exemplary embodiments, referring to FIG. 2 to FIG. 4, a second detection device 42 is provided on an inner side of the entrance of the upstream shielding channel 12, and the entrance shielding door 13 is configured to begin to close in response to a rear end of the carrying mechanism 3 being detected by the second detection device 42, so as to shield X-rays from leaking to the external environment.

In some exemplary embodiments, a third detection device 43 is provided on an inner side of the exit of the downstream shielding channel 14, and the exit shielding door 15 is configured to begin to open in response to a front end of the carrying mechanism 3 being detected by the third detection device 43 (indicating that the elongated article has been inspected), so as to allow the elongated article 200 to be removed from the ray inspection device 1.

In some exemplary embodiments, an appearance of the mobile stopper of the carrying mechanism being detected by the third detection device means that the mobile stopper of the carrying mechanism has approached the exit shielding door 15, indicating that the elongated article 200 has been substantially removed from the inspection space, the second driving mechanism drives the mobile stopper 342 to move away from the fixed stopper 341 so as to release the elongated article 200 placed on the carrier plate 31, so that the elongated article may be removed using, for example, a lifting apparatus or a robotic arm.

The third inspection device 43 includes a proximity switch installed on the inner side of the exit of the downstream shielding channel 14. The front end of the carrying mechanism 3 is installed with a first cooperating switch that cooperates with the proximity switch, so that when the proximity switch approaches the first cooperating switch, the exit shielding door 15 begins to open. The fixed stopper 341 is installed with a second cooperating switch that cooperates with the proximity switch, so that when the proximity switch approaches the second cooperating switch, the second driving mechanism drives the mobile stopper 342 to move away from the fixed stopper 341, thereby releasing the elongated article 200.

In some exemplary embodiments, referring to FIG. 2, a fourth detection device 44 is provided on an outer side of the exit of the downstream shielding channel 14, and the exit shielding door 15 is configured to begin to close in response to an appearance of the mobile stopper 432 of the carrying mechanism 3 being detected by the fourth detection device 44 (indicating that the elongated article 200 has been completely removed from the inspection space), so as to prevent X-rays from leaking to the outside of the inspection space.

In some exemplary embodiments, the second detection device 42 and the third detection device 43 may include photoelectric detection devices, such as a light curtain sensor, a laser sensor, and the like.

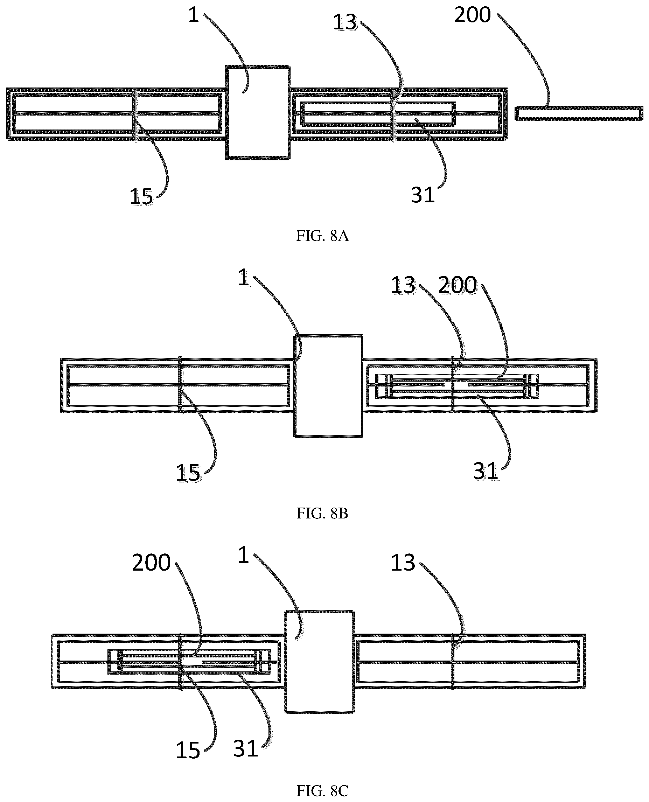

FIG. 8A to FIG. 8D show schematic diagrams of an operation process of the ray inspection system inspecting the elongated article according to an exemplary embodiment of the present disclosure.

The process of inspecting the elongated article by using an X-ray inspection device will be described below with reference to FIG. 8A to FIG. 8D.

Referring to FIG. 8A, first, in a state in which the entrance shielding door 13 is closed, the elongated article 200, such as the pipeline, is placed on the carrier plate 31 by using a lifting apparatus or a robotic arm.

Afterwards, referring to FIG. 8B, the first driving mechanism 33 is activated to push the mobile stopper 432 towards the fixed stopper 341 to gradually clamp the elongated article 200. When the first detection device 41 detects that one end of the elongated article 200 is abutting against the fixed stopper 341, the entrance shielding door 13 begins to open to allow the elongated article 200 to enter the ray inspection device 1 under the carry of the carrier plate 31.

In a case that the rear end of the carrying mechanism 3 is detected by the second detection device 42 on the inner side of the entrance of the upstream shielding channel 12, it is indicated that the elongated article 200 has completely entered the inspection space, the entrance shielding door 13 is driven to close to shield X-rays from leaking to the external environment. At the same time, the radiation inspection device 1 performs X-ray scanning inspection on the elongated article 200.

Afterwards, referring to FIG. 8C, in a case that the front end of the carrying mechanism 3 is detected by the third detection device 43 provided on the inner side of the exit of the downstream shielding channel 14, it is indicated that the elongated article has been inspected, the exit shielding door 15 is opened to allow the elongated article 200 to be removed from the ray inspection device 1. Afterwards, in a case that the third detection device 43 detects that the mobile stopper 342 of the carrying mechanism is approaching the exit shielding door 15, it is indicated that the elongated article 200 has been substantially removed from the inspection space, the second driving mechanism drives the mobile stopper 342 to move away from the fixed stopper 341 to release the elongated article 200 placed on the carrier plate 31.

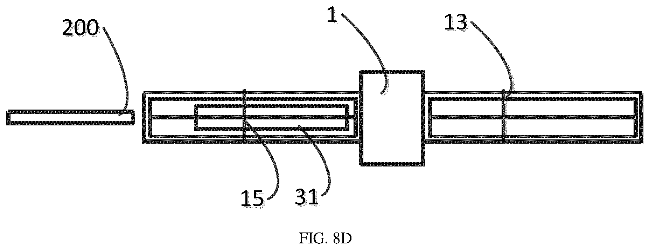

Afterwards, referring to FIG. 8D, the elongated article is removed from the carrier plate 31 using, for example, a lifting apparatus or a robotic arm. In a case that an appearance of the mobile stopper 432 of the carrying mechanism 3 is detected by the fourth detection device 44 on the outer side of the exit of the downstream shielding channel 14, it is indicated that the elongated article 200 has been completely removed from the inspection space, the exit shielding door 15 is closed to prevent X-rays from leaking to the outside of the inspection space and wait for an arrival of a next elongated article to be detected.

An embodiment in which the upstream side and the downstream side of the ray inspection device 1 are respectively provided with the upstream shielding channel and the downstream shielding channel, and the upstream shielding channel and the downstream shielding channel are respectively provided with the entrance shielding door and the exit shielding door has been described above. However, the present disclosure is not limited to this. Those skilled in the art will understand that only one shielding channel and one shielding door may be provided, that is, one shielding door may be used as both the entrance shielding door and the exit shielding door, and the entry and exit of the elongated article in an inspection area of the ray inspection device may be achieved by controlling forward or backward movement of the carrying mechanism.

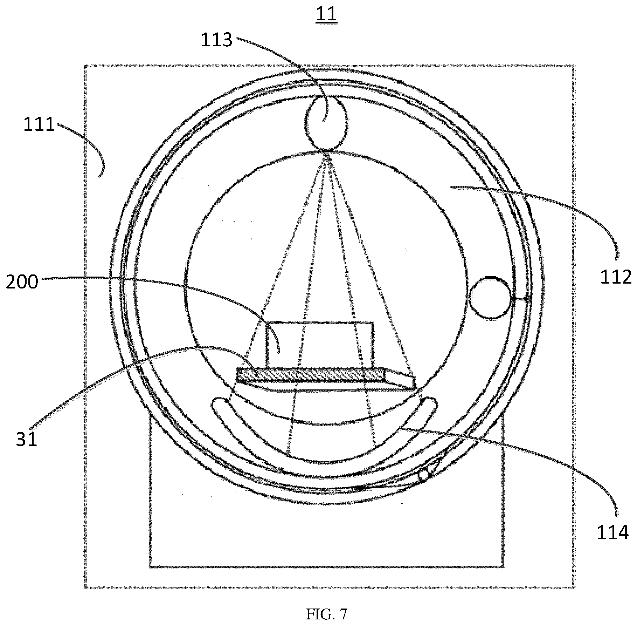

FIG. 7 shows a principle diagram of the scanning device according to an exemplary embodiment of the present disclosure.

In some exemplary embodiments, referring to FIG. 7, the scanning device 11 includes an upright frame 111, a slip ring 112 rotatably installed on the upright frame 111, an X-ray source 113 and a detector array 114 receiving X-rays from the X-ray source 113 that are installed on the slip ring and radially opposite to each other. The carrying mechanism 3 passes through an interior of the slip ring 112 in an axial direction. The scanning device 11 further includes a controller suitable for receiving electrical signals from various detection devices and controlling operation of related devices (such as the radiation source, the driving mechanism, and the like) of the ray inspection system.

In some exemplary embodiments, a degree of rotation of the slip ring 112 is determined based on a movement speed of the carrying mechanism 3, such that a rotational speed of the slip ring 112 matches a movement speed of the elongated article 200, thereby ensuring that a scanned image of the elongated article 200 reconstructed based on the detector array 114 is clear and accurate.

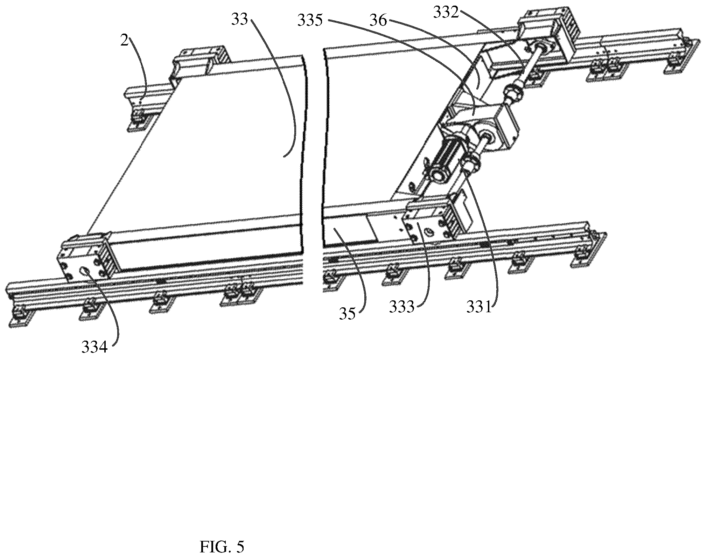

FIG. 5 shows a three-dimensional schematic diagram of a combination of the carrying mechanism and the transmission track according to an exemplary embodiment of the present disclosure, where the carrier plate is not shown.

In some exemplary embodiments, referring to FIG. 1 and FIG. 5, the carrying mechanism 3 further includes two longitudinal frames 35, and transverse frames 36 and a plurality of auxiliary transverse frames respectively installed between two ends of the two longitudinal frames 35. The carrier plate 31 is installed on the longitudinal frames 35 and the transverse frame 36, the two coupling structures 32 are respectively installed on the two transverse frames 36, and the first driving mechanism 33 is installed on one of the two transverse frames.

In some exemplary embodiments, referring to FIG. 1 and FIG. 5, the first driving mechanism includes a drive motor 331, a drive shaft 332, and two driving wheels 333. The drive motor 331 is installed on one of the two transverse frames 36, for example, on the transverse frame located on the rear side. The drive shaft 332 is installed at first ends (rear ends) of the two longitudinal frames and rotated under a drive of the drive motor 331. The two driving wheels 333 are respectively installed at two ends of the drive shaft 332, and the two driving wheels 333 respectively abut against the two transmission tracks 2 to drive the longitudinal frames 35 and the transverse frames 36 to achieve long-distance movement, thereby driving the carrier plate 31 installed on the longitudinal frames 35 and the transverse frames 36 and the elongated article on the carrier plate to move.

In some exemplary embodiments, the first driving mechanism 33 further includes two driven wheels 334 respectively installed at second ends (front ends) of the two longitudinal frames 35 opposite to the first ends, and the two driven wheels 334 respectively abut against the two transmission tracks 2.

Furthermore, the first driving mechanism 33 further includes a speed reduction mechanism 335, and the drive motor 331 is coupled to the drive shaft 332 through the speed reduction mechanism 335. In this way, a first drive motor 331 drives the drive shaft 332 to rotate through the speed reduction mechanism 335, and the drive shaft 332 drives the driving wheel 333 to rotate on the transmission track 2, such that the carrying mechanism 3 moves on the transmission track 2.

Those skilled in the art will understand that depending on the size and/or weight of the detected elongated article, an external dimension of the carrier plate 31 may be correspondingly increased and the number of the driving wheels and the driven wheels may be increased. In an alternative embodiment, all wheels used to support the longitudinal frames 35 and the transverse frames 36 may be provided as driving wheels.

Although an embodiment in which the first drive motor 331 drives two driving wheels 333 through the drive shaft 332 has been described, embodiments of the present disclosure are not limited to this. In an alternative embodiment, two drive motors may be used to independently drive the driving wheels disposed on two transmission tracks, as long as the driving wheels may rotate synchronously.

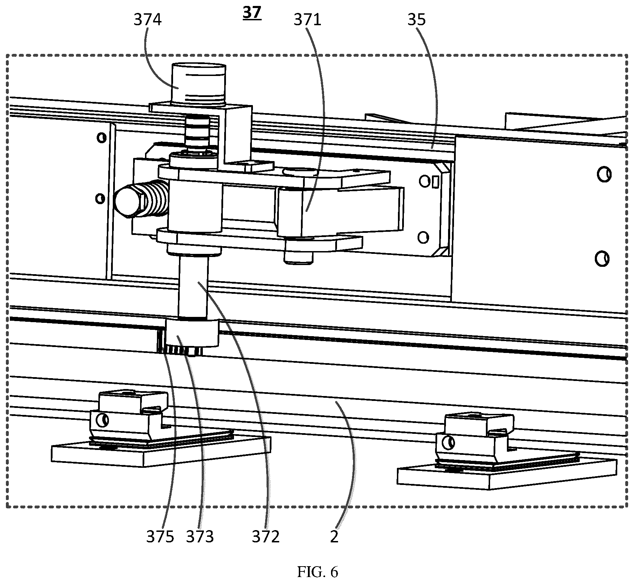

FIG. 6 shows a three-dimensional schematic diagram of a speed measuring mechanism according to an exemplary embodiment of the present disclosure.

In an exemplary embodiment, referring to FIG. 6, the carrying mechanism 3 further includes a speed measuring mechanism 37 installed on the longitudinal frame 35, and the speed measuring mechanism 37 is configured to measure a movement speed of the carrying mechanism 3. Furthermore, the speed measuring mechanism 37 includes a support frame 371, a rotating shaft 372, a rotating wheel 373, and an encoder 374. The support frame 371 is installed on the longitudinal frame 35. The rotating shaft 372 is rotatably installed on the support frame 371. The rotating wheel 373 is installed at a lower end of the rotating shaft 372 and is configured to rotate when the carrying mechanism 3 travels. The encoder 374 is installed on the support frame 371 and meshes with an upper end of the rotating shaft 372.

In an exemplary embodiment, the speed measuring mechanism 37 further includes an elastic holding mechanism configured to hold the rotating wheel in elastic contact with the transmission track. The rotating wheel includes a gear, and a rack 375 is provided on a side portion of the transmission track, and the gear meshes with the rack. During the movement of the carrying mechanism 3, the transmission track 2 drives the rotating wheel 373 to rotate, and the rotating wheel 373 drives the rotating shaft 372 to rotate. The encoder 374 calculates the movement speed of the carrying mechanism 3 based on a rotational speed of the rotating shaft 372. The speed measuring mechanism 37 may be used as a feedback device to transmit the measured movement speed of the carrying mechanism to the controller. The controller adjusts a rotational speed of the slip ring based on the movement speed measured by the speed measuring mechanism 37.

In an alternative embodiment, the rotating wheel 373 may be combined with the transmission track in a planar contact manner, and the rotation of the rotating wheel 373 is achieved by means of friction between the rotating wheel and the transmission track.

Through the movement of the carrying mechanism, the ray inspection system according to embodiments of the present disclosure may achieve X-ray scanning inspection on the elongated article as the measured target, and may operate at a very stable speed over a long distance and achieve high-precision non-destructive imaging detection.

According to the ray inspection system of embodiments of the present disclosure, the elongated article is placed on the carrier plate made of carbon fiber of the carrying mechanism. By using a sensor (a fifth detection device) disposed on the carrier plate, it is determined that the elongated article has been placed in position on the carrier plate, thus the step of loading of the device is completed. Then, the elongated article is clamped in front and rear directions by the positioning mechanism such as an electric cylinder clamping mechanism on the carrier plate, so as to ensure that the elongated article is firmly fixed on the carrier plate and will not loosen during transportation, so that the elongated article may be firmly and stably positioned.

According to the ray inspection system of embodiments of the present disclosure, the entrance shielding door at the entrance of the upstream shielding channel is closed, and the controller activates the carrying mechanism that may achieve long-distance transportation of the elongated article. The carrying mechanism may meet the long-distance transportation requirement of the elongated article while ensuring that the transportation process runs at a very smooth speed with a running speed fluctuation less than 3%, so that the elongated article may pass through the X-ray inspection device stably at a certain speed, and the full-size high-precision detection of the elongated article may be achieved.

According to the ray inspection system of embodiments of the present disclosure, during the transportation process of the elongated article, the X-ray inspection device continues to perform X-ray scanning inspection on the measured elongated article at a rotational speed corresponding to the movement speed of the carrying mechanism. Therefore, the inspection of the elongated article is a spiral scanning detection method. After the detection of the elongated article is completed, the elongated article will be transported to the electric exit shielding door at the exit of the downstream shielding channel, and the positioning mechanism on the carrier plate will release the elongated article at this point. Then the lifting apparatus is used to remove the elongated article and complete the entire process of elongated article detection.

According to the ray inspection system of embodiments of the present disclosure, due to the large appearance of the entire ray inspection system, sizes of the electric shielding doors in the upstream shielding channel and the downstream shielding channel are relatively large. By providing the first inspection device, the second inspection device, the third inspection device and the fourth inspection device, it is possible to avoid causing harm to relevant personnel when opening and closing the electric entrance and exit shielding doors.

Those skilled in the art will understand that the embodiments described above are exemplary and may be improved by those skilled in the art. The structures described in various embodiments may be freely combined without conflict in terms of structure or principle.

Although the present disclosure has been described in combination with the accompanying drawings, the embodiments disclosed in the accompanying drawings are intended to illustrate preferred embodiments of the present disclosure, and are not to be understood as limiting the present disclosure. Although some embodiments of the inventive concept of the present disclosure have been shown and illustrated, those of ordinary skill in the art will understand that changes may be made to these embodiments without departing from the principle and spirit of the present disclosure, and the scope of the present disclosure is limited by the claims and their equivalents.

## Claims

1. A ray inspection system (100) suitable for inspecting an elongated article (200), comprising:
a ray inspection device (1) comprising a scanning device (11) suitable for performing an X-ray scanning inspection of the elongated article;
a transmission track (2) comprising an input track (21) located on an upstream side of the scanning device and an output track (22) located on a downstream side of the scanning device; and
a carrying mechanism (3), wherein two ends of the carrying mechanism are movably installed on the transmission track, and the carrying mechanism is configured to transport the elongated article from the input track through the scanning device to the output track for the X-ray scanning inspection of the elongated article.

2. The ray inspection system according to claim 1, wherein the carrying mechanism comprises:
a carrier plate (31) suitable for carrying the elongated article;
two coupling structures (32) respectively installed at two ends of the carrier plate and movably coupled with the input track and the output track; and
a first driving mechanism (33) installed on one of the two coupling structures to drive the carrier plate to move from the input track through the scanning device to the output track.

3. The ray inspection system according to claim 2, wherein the carrying mechanism further comprises a positioning mechanism (34) installed on the carrier plate and configured to hold the elongated article on the carrier plate.

4. The ray inspection system according to claim 3, wherein the positioning structure comprises:
a fixed stopper (341) installed at a first end of the carrier plate;
a mobile stopper (342) installed at a second end of the carrier plate opposite to the first end, and the mobile stopper is configured to cooperate with the fixed stopper to clamp the elongated article; and
a second driving mechanism installed on the carrier plate and configured to drive the mobile stopper to move towards the fixed stopper so as to clamp the elongated article placed on the carrier plate.

5. The ray inspection system according to claim 4, wherein the second driving mechanism comprises:
a driving part (343) installed on the carrier plate; and
a telescopic rod (344) configured to stretch and contract relative to the carrier plate under a drive of the driving part, and the mobile stopper is installed at an end portion of the telescopic rod.

6. The ray inspection system according to claim 4, wherein the fixed stopper is provided with a first detection device (41) configured to detect an abutment of one end of the elongated article against the fixed stopper.

7. The ray inspection system according to claim 6, wherein the first driving mechanism starts driving the carrier plate to move towards the output track, in response to the first detection device detecting that one end of the elongated article is abutting against the fixed stopper.

8. The ray inspection system according to claim 7, wherein the ray inspection device further comprises:
an upstream shielding channel (12) disposed upstream of the scanning device;
an entrance shielding door (13) installed at an entrance of the upstream shielding channel;
a downstream shielding channel (14) disposed downstream of the scanning device;
and
an exit shielding door (15) installed at an exit of the downstream shielding channel,
wherein the upstream shielding channel, the downstream shielding channel, the closed entrance shielding door, and the closed exit shielding door enclose an X-ray inspection space to shield X-rays from leaking to an external environment.

9. The ray inspection system according to claim 8, wherein the entrance shielding door is configured to begin to open, in response to the first detection device detecting that one end of the elongated article is abutting against the fixed stopper, so as to allow the elongated article to enter the ray inspection device.

10. The ray inspection system according to claim 8, wherein a second detection device (42) is provided on an inner side of the entrance of the upstream shielding channel, and the entrance shielding door is configured to begin to close in response to a rear end of the carrying mechanism being detected by the second detection device.

11. The ray inspection system according to claim 8, wherein a third detection device (43) is provided on an inner side of the exit of the downstream shielding channel, and the exit shielding door is configured to begin to open in response to a front end of the carrying mechanism being detected by the third detection device so as to allow the elongated article to be removed from the ray inspection device.

12. The ray inspection system according to claim 11, wherein in response to an appearance of the mobile stopper of the carrying mechanism being detected by the third detection device, the second driving mechanism drives the mobile stopper to move away from the fixed stopper so as to release the elongated article placed on the carrier plate.

13. The ray inspection system according to claim 12, wherein the third inspection device comprises a proximity switch installed on the inner side of the exit of the downstream shielding channel;
wherein the front end of the carrying mechanism is installed with a first cooperating switch cooperating with the proximity switch, so that when the proximity switch approaches the first cooperating switch, the exit shielding door begins to open; and
wherein the fixed stopper is installed with a second cooperating switch cooperating with the proximity switch, so that when the proximity switch approaches the second cooperating switch, the second driving mechanism drives the mobile stopper to move away from the fixed stopper.

14. The ray inspection system according to claim 3, wherein a fourth detection device (44) is provided on an outer side of the exit of the downstream shielding channel, and the exit shielding door is configured to begin to close in response to an appearance of the mobile stopper of the carrying mechanism being detected by the fourth detection device.

15. The ray inspection system according to any one of claims 1 to 14, wherein the scanning device comprises:
an upright frame (111); and
a slip ring (112) rotatably installed on the upright frame, and the carrying mechanism passes through an interior of the slip ring in an axial direction.

16. The ray inspection system according to claim 15, wherein a degree of rotation of the slip ring is determined based on a movement speed of the carrying mechanism, such that a rotational speed of the slip ring matches a movement speed of the elongated article.

17. The ray inspection system according to any one of claims 2 to 14, wherein the carrying mechanism further comprises two longitudinal frames (35) and transverse frames (36) respectively installed between two ends of the two longitudinal frames, the carrier plate is installed on the longitudinal frames and the transverse frames, the two coupling structures are respectively installed on two transverse frames, and the first driving mechanism is installed on one of the two transverse frames.

18. The ray inspection system according to claim 17, wherein the first driving mechanism comprises:
a drive motor (331) installed on one of the two transverse frames;
a drive shaft (332) installed at first ends of the two longitudinal frames and configured to rotate under a drive of the drive motor; and
two driving wheels (333) respectively installed at two ends of the drive shaft, and the two driving wheels respectively abut against two transmission tracks to drive the longitudinal frames and the transverse frames to move.

19. The ray inspection system according to claim 18, wherein the first driving mechanism further comprises:
two driven wheels (334) respectively installed at second ends of the two longitudinal frames opposite to the first ends, and the two driven wheels respectively abut against the two transmission tracks.

20. The ray inspection system according to claim 19, wherein the first driving mechanism further comprises a speed reduction structure (335), and the drive motor is coupled to the driving shaft through the speed reduction mechanism.

21. The ray inspection system according to claim 17, wherein the carrying mechanism further comprises a speed measuring mechanism (37) installed on the longitudinal frame, and the speed measuring mechanism is configured to measure a movement speed of the carrying mechanism.

22. The ray inspection system according to claim 21, wherein the speed measuring mechanism comprises:
a support frame (371) installed on the longitudinal frame;
a rotating shaft (372) rotatably installed on the support frame;
a rotating wheel (373) installed at a lower end of the rotating shaft, and the rotating wheel is configured to rotate when the carrying mechanism travels; and
an encoder (374) installed on the support frame and meshing with an upper end of the rotating shaft.

23. The X-ray inspection system according to claim 22, wherein the speed measuring mechanism further comprises an elastic holding mechanism configured to hold the rotating wheel in elastic contact with the transmission track.
